# EUROPEAN PATENT APPLICATION

(11) **EP 2 597 558 A1**
(43) Date of publication of application: **29.05.2013**
(21) Application number: 12194046.4
(22) Date of filing: 23.11.2012
(51) Int. Cl.: G06F 3/0487, G06F 1/16, H04M 1/02, H04M 1/725

(54) **Apparatus and method for displaying an application in a wireless terminal**

(30) Priority: 28.11.2011 KR 20110125448
(71) Applicant: Samsung Electronics Co., Ltd, Gyeonggi-do 443-742 (KR)
(72) Inventor: Jung, Hee-Jung, 443-742 Gyeonggi-do (KR); Kim, Do-Yun, 443-742 Gyeonggi-do (KR); Kim, Sung-Yong, 443-742 Gyeonggi-do (KR); Kim, Hyo-Jin, 443-742 Gyeonggi-do (KR); Jeong, Dong-Won, 443-742 Gyeonggi-do (KR); Jung, In-Hyung, 443-742 Gyeonggi-do (KR)
(74) Representative: Hutter, Jacobus Johannes

(57) **Abstract**

An apparatus and method display an application in a wireless terminal. The application displaying apparatus and method are capable of simultaneously displaying a plurality of applications in a wireless terminal, with the apparatus including: a flexible display unit which has a screen divided in response to a folding action; and a controller for controlling the flexible display unit to divide the screen of the flexible display unit in response to the folding action for the flexible display unit and to display applications on the divided screens.

## Description

### BACKGROUND OF THE INVENTION

### Field of the Invention

The present invention relates generally to an apparatus and method for displaying an application in a wireless terminal, and more particularly, to an application displaying apparatus and method capable of simultaneously displaying a plurality of applications in a wireless terminal.

### Description of the Related Art

When a plurality of applications are executing (or running) in a wireless terminal, only one application in a top layer in a stack of the applications can be displayed at any given time on a display unit.

Accordingly, to view another currently executing (or running) application, a user is required to press a home key or input a preset command of the wireless terminal for at least a predetermined time to switch to having the other application displayed in the top layer on the display unit. In addition, when various types of currently executing applications are displayed through a task manager in response to the pressing of the home key or input of the preset command, the user may select and display a desired application from among the applications displayed in the top layer of the display unit through the task manager.

As described above, since only one application in the top layer is displayed even though a plurality of applications are executing or running, another currently executing application can be displayed only through the task manager, so the movement between applications is annoying, and operation of the applications and use of the wireless terminal are inefficient.

### SUMMARY OF THE INVENTION

An aspect of an embodiment of the present invention is to provide an application displaying apparatus and method capable of simultaneously displaying a plurality of applications in a wireless terminal.

According to one aspect of the present invention, there is provided an apparatus for displaying applications in a wireless terminal, including: a flexible display unit of which a screen is divided in response to a folding action; and a controller for controlling the flexible display unit to divide the screen of the flexible display unit in response to a folding action for the flexible display unit and to display the applications on the divided screens.

According to another aspect of the present invention, there is provided a method of displaying applications in a wireless terminal including a flexible display unit, with the method including: if a folding action for the flexible display unit occurs, dividing a screen of the flexible display unit; and displaying applications on the divided screens.

### BRIEF DESCRIPTION OF THE DRAWINGS

The above features and advantages of the present invention will become more apparent from the following detailed description when taken in conjunction with the accompanying drawings in which:
FIG. 1 is a block diagram of a wireless terminal according to an exemplary embodiment of the present invention;
FIG. 2 is an illustrative diagram for describing a folding detector of a flexible display unit in the wireless terminal of FIG. 1;
FIG. 3 is a flowchart illustrating a process of simultaneously displaying a plurality of applications in the wireless terminal, according to the exemplary embodiment of the present invention;
FIGS. 4 and 5 are illustrative diagrams for describing a simultaneous display of a plurality of applications based on screen division of the flexible display unit in the wireless terminal according to the exemplary embodiment of the present invention; and
FIGS. 6A-6B are illustrative diagrams for describing size adjustment in the screen division of the flexible display unit in the wireless terminal according to the exemplary embodiment of the present invention.

### DETAILED DESCRIPTION OF THE INVENTION

Preferred embodiments of the present invention will be described herein below with reference to the accompanying drawings. Like reference numbers are used to refer to like elements throughout the drawings.

Among the terms set forth herein, a terminal refers to any kind of device capable of processing data which is transmitted or received to or from any external entity. The terminal may display icons or menus on a screen to which stored data and various executable functions are assigned or mapped. The terminal may include a computer, a notebook, a tablet PC, a mobile device, and the like.

Among the terms set forth herein, a screen refers to a display or other output devices which visually display information to the user, and which optionally are capable of receiving and electronically processing tactile inputs from a user using a stylo, a finger of the user, or other techniques for conveying a user selection from the user to the output devices.

Among terms set forth herein, data refers to any kind of information processed by the device, including text and/or images received from any external entities, messages transmitted or received, and information created when a specific function is executed by the device.

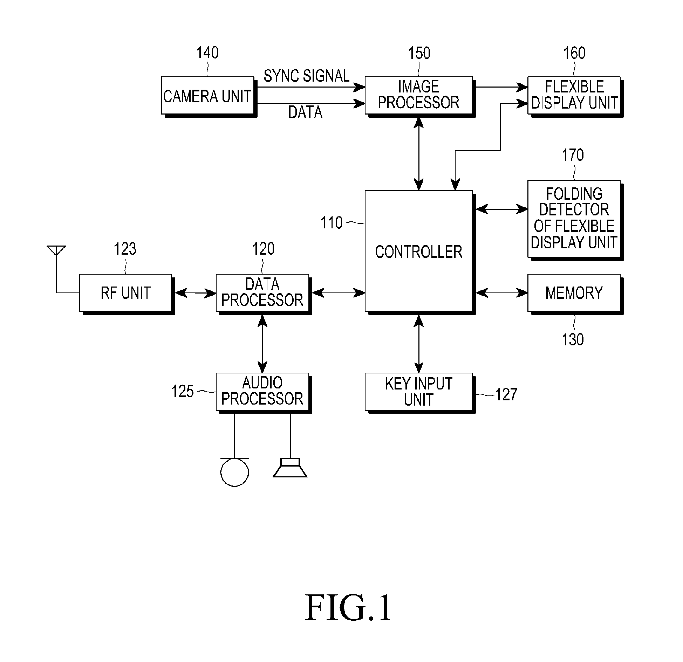

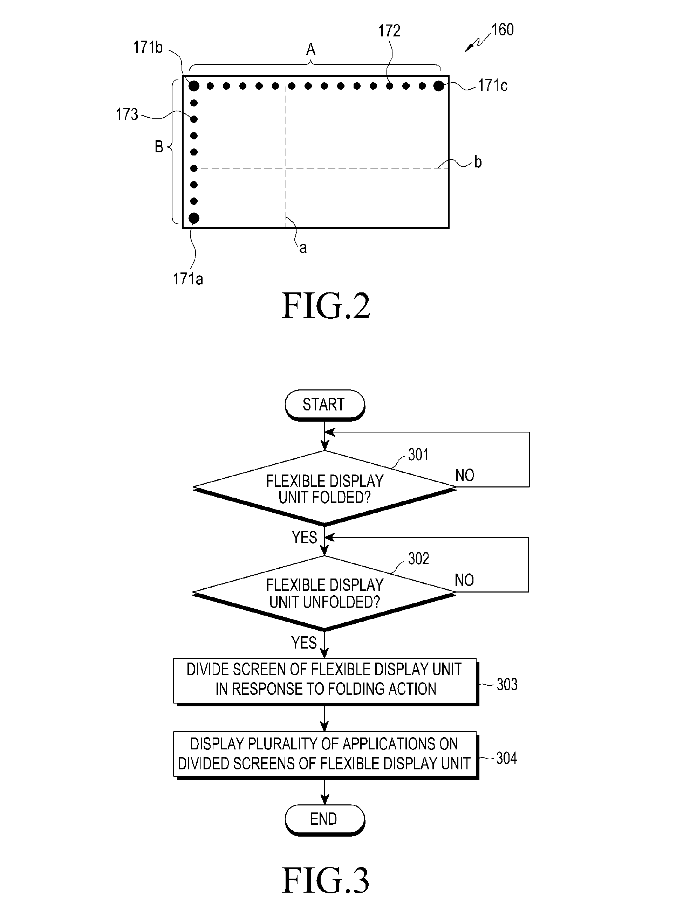

FIG. 1 is a block diagram of a wireless terminal according to an exemplary embodiment of the present invention, and FIG. 2 is an illustrative diagram for describing a folding detector 170 of a flexible display unit 160 in the wireless terminal of FIG. 1.

Referring to FIG. 1, a Radio Frequency (RF) unit 123 performs a wireless communication function of the wireless terminal. The RF unit 123 includes an RF transmitter for up-converting a frequency of a transmission signal and amplifying the up-converted transmission signal and an RF receiver for low-noise amplifying a received signal and down-converting a frequency of the amplified received signal. A data processor 120 includes a transmitter for coding and modulating the transmission signal and a receiver for demodulating and decoding the received signal. In other words, the data processor 120 may include a modem and a codec. The codec includes a data codec for processing packet data and the like, and an audio codec for processing an audio signal such as voice. An audio processor 125 plays a received audio signal output from the audio codec in the data processor 120 and transfers a transmission audio signal picked up by a microphone to the audio codec in the data processor 120.

A key input unit 127 includes alphanumeric keys for inputting alphanumeric information and function keys for setting various functions.

A memory 130 may include a program memory and a data memory. The program memory may store programs for controlling a general operation of the wireless terminal. In addition, the program memory may store programs for controlling the flexible display unit 160 to display applications on divided screens in response to a folding action of the flexible display unit 160 according to an embodiment of the present invention. The data memory may temporarily store data generated while the programs are executed.

A controller 110 is connected to or in communication with various components of the wireless terminal, including the data processor 120, the key input unit 127, the memory 130, the flexible display unit 160, and the folding detector 170, such that the controller 110 controls the overall operation of the wireless terminal.

According to an exemplary embodiment of the present invention, the controller 110 controls the flexible display unit 160 to divide a screen of the flexible display unit 160 in response to a folding action of the flexible display unit 160 and to display applications on the divided screens.

In addition, if an unfolding action occurs after at least one folding action of the flexible display unit 160, the controller 110 controls the flexible display unit 160 to divide the screen of the flexible display unit 160 in response to the at least one folding action and to display applications on the divided screens.

In addition, if information regarding a sensor for informing of or indicating a start point to determine the division of the undivided screen into the divided screens, and information regarding a specific sensor overlapping the sensor for informing of or indicating the start point are received from the folding detector 170 of the flexible display unit 160, the controller 110 detects the folding of the flexible display unit 160, determines a point corresponding to half a distance between the sensor for informing of the start point and the specific sensor as a screen division point, and determines the number of divisions of the screen.

The term "overlapping" as used herein, in connection with the sensors, is defined as the configuration in which a pair of sensors are abutting, adjacent, substantially adjacent, or proximate to each other and/or within a predetermined threshold of detection associated with each sensor, such that the sensors in such an overlapping configuration generate at least one signal to the controller 110, such as the sensor information described herein, indicating that the pair of sensors are "overlapping".

In an exemplary embodiment, the sensors may be magnetic sensors with magnetic field detecting elements known in the art, such that proximity of a pair of sensors causes the magnetic field between the pair of sensors to exceed a predetermined magnetic flux threshold which causes at least one of the sensors to generate a detection signal, and that an increase of distance of the pair of sensors from each other causes the magnetic field between the pair of sensors to not exceed the predetermined threshold, which causes the detection signal to cease. Other proximity sensors known in the art may be used and mounted on the sides A, B of the flexible display unit 160, as shown in FIG. 2.

Thereafter, if sensor information (regarding a sensor for informing of a start point and a specific sensor) is received again from the folding detector 170 of the flexible display unit 160 within a predetermined time in a folded state of the flexible display unit 160, the controller 110 determines a screen division point in the same manner as described above and increases the number of divisions of the screen.

Otherwise, if any sensor information is not received from the folding detector 170 of the flexible display unit 160 even when the predetermined time passes in the folded state of the flexible display unit 160, the controller 110 detects unfolding of the flexible display unit 160 and controls the flexible display unit 160 to divide the screen of the flexible display unit 160 by the number of divisions of the screen that is determined in response to the folding action for the number of divisions of the screen and to display a number of applications corresponding to the number of divisions of the screen on the divided screens of the flexible display unit 160.

That is, once the flexible display unit 160 has been detected to have been folded, if the sensor information is no longer received due to the sensors being brought out of range of each other to no longer overlap, the controller 110 determines that the flexible display unit 160 has been unfolded, and so the controller 110 finalizes the number of divisions of the screen and instructs the flexible display unit 160 to generate the divided screens and to display each application in a respective one of the divided screens.

In addition, the controller 110 may control the flexible display unit 160 to display a plurality of currently executing applications on divided screens in response to a folding action for the flexible display unit 160 in the executed order or an order set by combining their priorities set as default and their frequencies of use.

In addition, the controller 110 may control the flexible display unit 160 to display later executed applications on divided screens in response to a folding action for the flexible display unit 160 in an order according to their execution.

According to an exemplary embodiment of the present invention, the folding detector 170 of the flexible display unit 160 detects a folding action of the flexible display unit 160. The folding detector 170 of the flexible display unit 160 includes a plurality of sensors linearly arranged along two sides of the flexible display unit 160 and perpendicular to each other, with corner sensors for informing of or indicating a start point from among the plurality of sensors such that the corner sensors are located at a respective corners of the two sides. Referring to FIG. 2 illustrating the folding detector 170 of the flexible display unit 160, a plurality of sensors 172 are linearly arranged along a first side A, and a plurality of sensors 173 are linearly arranged along a second side B of the flexible display unit 160, with the sensors 172, 173 oriented perpendicular to each other in the flexible display unit 160, and with corner sensors 171a, 171b, and 171c for informing of or indicating a start point located at corners of the first side A and the second side B. The sensors 171a, 171b, 171c, 172, and 173 are located at or substantially adjacent to the edges of the screen upon which information is displayed by the flexible display unit 160.

Thus, if one of the sensors 171a, 171b, and 171c for informing of or indicating a start point overlaps a specific sensor such as sensor 172 or sensor 173, in response of a folding action for the flexible display unit 160, the folding detector 170 of the flexible display unit 160 transmits information regarding the sensors 171a, 171b, 171c for informing the controller 110 of a start point and information regarding the specific sensor 172 or 173 overlapping the sensor 171a, 171b, 171c for informing the controller 110 of the start point, such that the start point determines how the screen is to be divided, as described herein.

In an exemplary embodiment, shown in FIG. 1, a camera unit 140 and an image processor 150 are also included in the wireless terminal, and connected to or in communication with the controller 110. The camera unit 140 includes a camera sensor for capturing image data and converting the captured optical signal into an electrical signal, and a signal processor for converting an analog image signal captured by the camera sensor into digital data. The camera sensor may be implemented, in an exemplary embodiment, by a Charge-Coupled Device (CCD) or Complementary Metal Oxide Semiconductor (CMOS) sensor, and the signal processor may be implemented, in an exemplary embodiment, by a Digital Signal Processor (DSP). The camera sensor and the signal processor may be implemented, in an exemplary embodiment, by an integrated device such as an integrated circuit, or by separate components connected together.

The image processor 150 performs Image Signal Processing (ISP) for displaying images on the flexible display unit 160 using image signals output from the camera unit 140, and the ISP may perform functions such as gamma correction, interpolation, spatial variation, image effects, image scaling, Automatic White Balance (AWB), Automatic Exposure (AE), and Automatic Focusing (AF). The image processor 150 processes the image signals output from the camera unit 140 on a frame basis, and outputs the frame-based image data according to the characteristics and size of the flexible display unit 160. The image processor 150, which may include a video codec, compresses frame image data displayed on the flexible display unit 160 by preset coding, and restores (or decompresses) the compressed frame image data into its original frame image data. The video codec may include a JPEG codec, MPEG4 codec, Wavelet codec, etc. In an exemplary embodiment in which the image processor 150 includes an On-Screen Display (OSD) function, the controller 110 may control the image processor 150 to output OSD data according to the size of a screen of the flexible display unit 160 on which the data is displayed.

In an exemplary embodiment, the flexible display unit 160 may be implemented by a thin substrate such as plastic and includes a display device such as an e-paper, a Liquid Crystal Display (LCD), and Organic Light Emitting Diodes (OLED). The flexible display unit 160 displays data, images, and other visual information output from the controller 110 to be viewed by a user.

In addition, according to an exemplary embodiment of the present invention, the flexible display unit 160 divides the screen thereof in response to a folding action of the flexible display unit 160 and displays applications on the divided screens.

An operation of simultaneously displaying a plurality of applications by the wireless terminal described above is described in detail with reference to FIGS. 3 to 6.

FIG. 3 is a flowchart illustrating a process of simultaneously displaying a plurality of applications in the wireless terminal, according to an exemplary embodiment of the present invention.

Hereinafter, this embodiment is described in detail with reference to FIGS. 1 and 2.

Referring to FIG. 3, when the flexible display unit 160 of the wireless terminal as shown in FIG. 2 is folded along axis a or axis b, if one of the sensors 171a, 171b, 171c at the corners, used for informing of or indicating a start point, overlaps a specific sensor 172 along the side A or a specific sensor 173 along the side B, the folding detector 170 of the flexible display unit 160 transmits information regarding the appropriate overlapped corner sensor 171a, 171b, 171c for informing of or indicating a start point to the controller 110, and information regarding the specific sensor 172, 173 overlapping the sensor 171 for informing of or indicating the start point to the controller 110.

Upon receiving the sensor information, i.e., the information regarding the appropriate overlapped corner sensor 171a, 171b, 171c for informing of a start point to the controller 110, and the information regarding the specific sensor 172, 173 overlapping the appropriate overlapped corner sensor 171a, 171b, 171c for informing of a start point to the controller 110, from the folding detector 170 of the flexible display unit 160, the controller 110 detects folding of the flexible display unit 160, determines a point corresponding to half a distance between the appropriate corner sensor 171a, 171b, 171c and the specific sensor 172, 173, wherein the distance is determined from the original distances when the appropriate corner sensor 171a, 171b, 171c and the specific sensor 172 are not overlapping, with the determined halfway point being set as a screen division point, and the controller 110 determines the number of divisions of the screen in step 301.

For example, if information regarding a start sensor 171b and information regarding a specific sensor 172 are received from the folding detector 170 of the flexible display unit 160, the controller 110 determines a point corresponding to half a distance between the start sensor 171b and the specific sensor 172, prior to folding and the overlapping of the sensors 171b, 172, as a screen division point and determines the number of divisions of the screen to be two by dividing the screen into left and right screens about axis a in FIG. 2.

Thereafter, if information regarding a start sensor 171a and information regarding another specific sensor 173 located along the side B are received by the controller 110 from the folding detector 170 of the flexible display unit 160 within a predetermined time in a state where the flexible display unit 160 is folded, i.e., in a state where the start sensor 171b overlaps the specific sensor 172, the controller 110 determines that the start sensor 171a and the sensor 173 are overlapping, and so the controller 110 determines an axis b corresponding to half a distance between the start sensor 171b and the second specific sensor 173 as a screen division point and determines the number of divisions of the screen to be four, i.e., left, right, upper, and lower screens, by dividing the screen into upper and lower screens based on the point b, as shown in FIG. 2.

If any sensor information is not received from the folding detector 170 of the flexible display unit 160 within a predetermined time after the folding action for the flexible display unit 160 has been performed, i.e., if information besides the sensor information received during the folding action for the flexible display unit 160 is not received or ceases to be received, indicating that the pairs of sensors 171b and 172, and/or the pairs of sensors 171a and 173, are no longer overlapping, the controller 110 determines that there has been an unfolding for the flexible display unit 160 in step 302.

In step 303, the controller 110 divides the screen of the flexible display unit 160 by the number of divisions of the screen that is determined during the folding action for the flexible display unit 160 and proceeds to step 304 to display a number of applications corresponding to the number of divided screens, with each application displayed on a respective one of the divided screens.

In step 304, the controller 110 may control the flexible display unit 160 to display a plurality of currently executing applications on divided screens of the flexible display unit 160 in the executed order or an order set by combining their priorities set as default and their frequencies of use.

Alternatively, in step 304, the controller 110 may control the flexible display unit 160 to display later executed applications on divided screens of the flexible display unit 160 in a time order; that is, in the order in which the applications are initially executed, with a first executed application displayed on a first divided screen, and each subsequently executed application displayed on later divided screens.

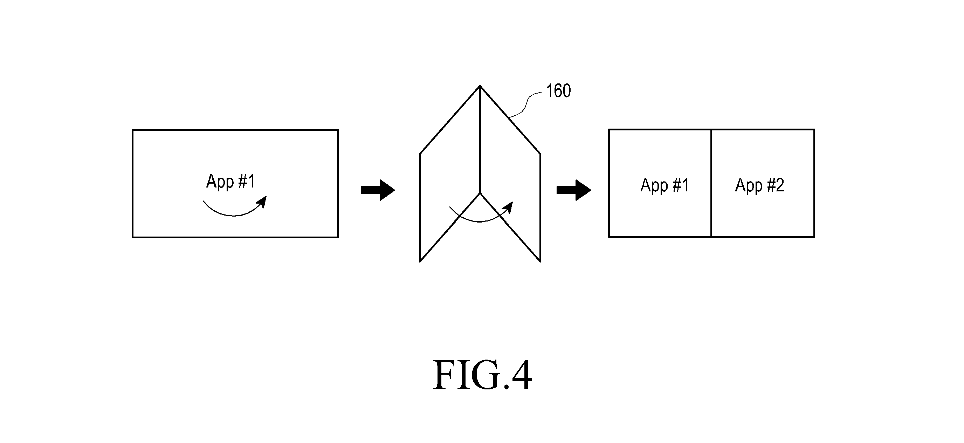

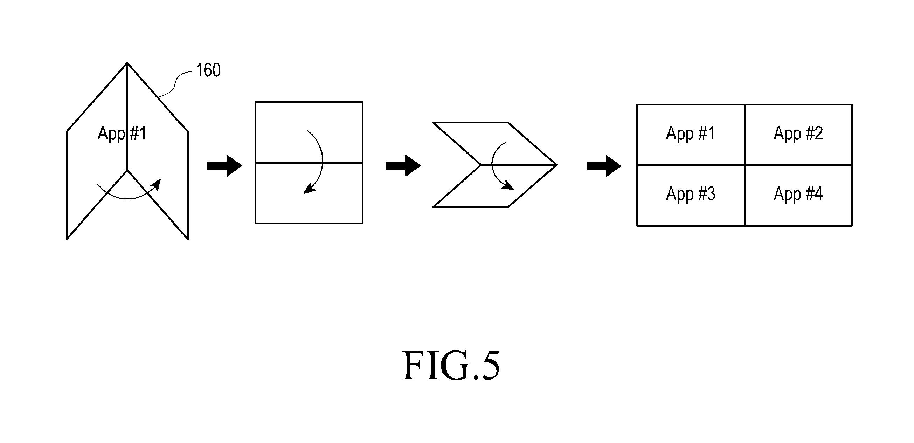

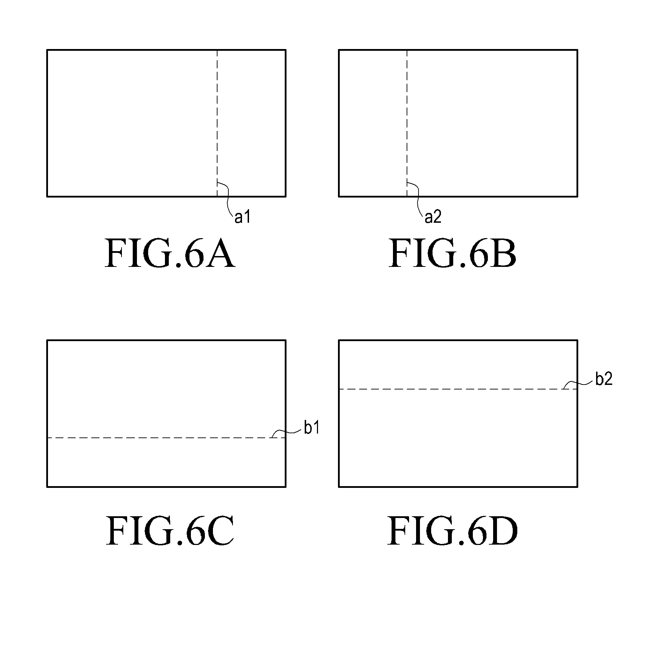

FIGS. 4 and 5 are illustrative diagrams for describing a simultaneous display of a plurality of applications based on screen division of the flexible display unit 160 in the wireless terminal according to an embodiment of the present invention, and FIGS. 6A-6B are illustrative diagrams for describing size adjustment in the screen division of the flexible display unit 160 in the wireless terminal according to an embodiment of the present invention.

FIG. 4 illustrates an operation of displaying two applications App#1 and App#2 on the flexible display unit 160 divided into left and right screens in response to a left and right folding action for the flexible display unit 160 while the single application App#1 is initially displayed on the flexible display unit 160. After the folding action, the display unit 160 displays two screens, with each of App#1 and App#2 being displayed in a separate respective divided screen.

FIG. 5 illustrates an operation of displaying four applications App#1 to App#4 on the flexible display unit 160 divided into left, right, upper, and lower screens in response to an upper and lower folding action for the flexible display unit 160 after the left and right folding action while the single application App#1 is initially displayed on the flexible display unit 160. After the first left-to-right folding action has been detected, a second folding action, being an up-to-down folding action, is detected, so the initial undivided screen is divided into four divided screens: upper left, upper right, lower left, and lower right. A plurality of application, such as App#1 to App#4 are then displayed, with each of the applications being displayed in a separate respective divided screen.

FIGS. 6A-6B illustrate that size adjustment in the screen division of the flexible display unit 160 may be variously achieved in response to a folding of the flexible display unit 160 about different axes a1, a2, b1, or b2, respectively. Accordingly, the divided screens may be of different sizes having different rectangular shapes, depending on the positions of each axis a1, a2, b1, and b2 determined by the location of the starting sensors 172, 173 in FIG. 2 when the corner sensors 171a, 171b, and 171c are overlapped onto such starting sensors 172, 173.

Although it has been illustrated in the embodiments of the present invention that a plurality of currently executing or later executed applications are displayed on divided screens in response to a folding action for a flexible display unit, in alternative embodiments, a plurality of items of data of a specific application may be displayed on divided screens in response to a folding action for the flexible display unit in a specific application mode. For example, a plurality of items of photo data, such as multiple photos in a single photo album file, may be displayed on divided screens in response to a folding action for the flexible display unit in a gallery mode.

As is apparent from the foregoing description, the proposed apparatus and method for displaying an application in a wireless terminal including a flexible display unit allow the flexible display unit to simultaneously display a plurality of applications.

The above-described apparatus and methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the invention has been shown and described with reference to certain exemplary embodiments, such as a wireless terminal, thereof, it will be understood by those skilled in the art that various changes in form and details may be made therein without departing from scope of the invention as defined by the appended claims.

## Claims

1. An apparatus for displaying applications in a wireless terminal having a flexible display unit (160) and a controller (110), **characterized in that**:
the flexible display unit (160) displays an undivided screen; and
the controller (110), responsive to a folding action (301), controls the flexible display unit (160) to divide (303) the undivided screen into a plurality of divided screens and to display (304) the applications respectively on the divided screens.

2. The apparatus of claim 1, **characterized in that** the controller (110), responsive to an unfolding action (302) occurring after the folding action (301), controls the flexible display unit (160) to display the applications respectively on the divided screens.

3. The apparatus of claim 1, **characterized in that** the flexible unit (160) includes a folding detector (170) which detects the folding action (301).

4. The apparatus of claim 3, **characterized in that** the folding detector (170) of the flexible display unit (160) includes a plurality of sensors (171a, 171b, 171c, 172, 173) linearly arranged along two sides (A, B) perpendicular to each other of the flexible display unit (160), wherein corner sensors (171a, 171b, 171c) of the plurality of sensors (171a, 171b, 171c, 172, 173) are allocated to each corner of the two sides (A, B) and represent each respective corner.

5. The apparatus of claim 4, **characterized in that** the folding detector (170), responsive to a specific sensor (172, 173) of the plurality of sensors (171a, 171b, 171c, 172, 173) overlapping one of the corner sensors (171a, 171b, 171c), transmits information to the controller (110) regarding the specific sensor (172, 173) for informing of a start point to determine the division of the undivided screen into the divided screens.

6. The apparatus of claim 2, **characterized in that** the flexible display unit (160) includes a folding detector (170) having a plurality of sensors (171a, 171b, 171c, 172, 173), with the folding detector (170) responsive to a pair of the sensors (171a, 171b, 171c, 172, 173) overlapping to generate information regarding the overlapping sensors (171a, 171b, 171c, 172, 173) for informing the controller (110) of a start point to determine the division of the undivided screen into the divided screens; and wherein the controller (110) detects folding of the flexible display unit (160) and detects a halfway point corresponding to half a distance between the pair of sensors (171a, 171b, 171c, 172, 173) when the pair of sensors (171a, 171b, 171c, 172, 173) are not overlapping, with the halfway point being a screen division point.

7. The apparatus of claim 2, **characterized in that** the flexible display unit (160) includes a folding detector (170) having a plurality of sensors (171a, 171b, 171c, 172, 173) for generating sensor information, wherein the controller (110), responsive to not receiving sensor information from the folding detector (170) of the flexible display unit (160) for a predetermined time, detects unfolding of the flexible display unit (160).

8. The apparatus of claim 1, **characterized in that** the controller (110) controls the flexible display unit (160) to display a plurality of currently executing applications on the divided screens in at least a first order determined by the times that the applications are executed, or a second order set by combining priorities of the applications set as default and frequencies of use of the applications.

9. The apparatus of claim 1, **characterized in that** the controller (110) controls the flexible display unit (160) to display a plurality of applications on the divided screens in a time order according to the time of execution of the applications, with later executed applications being displayed on later opened screens of the divided screens.

10. A method of displaying applications in a wireless terminal including a flexible display unit (160), the method **characterized by** the steps of:
detecting (301) a folding action associated with the flexible display unit (160);
dividing (303) an undivided screen of the flexible display unit (160) into a plurality of divided screens in response to the detection of the folding action; and
displaying (304) the applications on the divided screens.

11. The method of claim 10, wherein the dividing step (303) is **characterized by** the steps of:
detecting (304) an unfolding action after the folding action(301); and
dividing the undivided screen of the flexible display unit (160) in response to the folding action (301) and the unfolding action (302).

12. The method of claim 11, wherein the dividing step (303) is **characterized by** the steps of:
receiving, from a folding detector (170) of the flexible display unit (160), information regarding a first sensor (171a, 171b, 171c) for informing of a start point to determine the division of the undivided screen into the divided screens, and of information regarding a specific sensor (172, 173) overlapping the first sensor (171a, 171b, 171c);
detecting a point corresponding to half a distance between the first sensor (171a, 171b, 171c) and the specific sensor (172, 173), when the first sensor (171a, 171b, 171c) and the specific sensor (172, 173) are not overlapping, as a screen division point.

13. The method of claim 11, wherein the dividing step (303) is **characterized by** the step of detecting if sensor information is not received from a folding detector (170) of the flexible display unit (160) for a predetermined time, for detecting (302) unfolding of the flexible display unit (160).

14. The method of claim 10, wherein the displaying step (304) is **characterized by** the step of displaying a plurality of currently executing applications on the divided screens in at least a first order determined by the times that the applications are executed, or a second order set by combining priorities of the applications set as default and frequencies of use of the applications.

15. The method of claim 10, wherein the displaying step (304) is **characterized by** the step of displaying a plurality of applications on the divided screens in a time order according to the time of execution of the applications, with later executed applications being displayed on later opened screens of the divided screens.
